# EUROPÄISCHE PATENTSCHRIFT

(11) **EP 3 464 930 B1**
(45) Veröffentlichungstag und Bekanntmachung des Hinweises auf die Patenterteilung: **29.07.2020**
(21) Anmeldenummer: 17739198.4
(22) Anmeldetag: 26.05.2017
(51) Int. Cl.: F16F 3/06, F01L 1/00, F01L 1/02, F01L 1/344, F01L 1/46

(54) **DREHFEDERANORDNUNG SOWIE NOCKENWELLENVERSTELLER UND RIEMEN- ODER KETTENSPANNER DAMIT**
TORSION SPRING ASSEMBLY, CAMSHAFT PHASER AND BELT OR CHAIN TIGHTENER THEREWITH
ENSEMBLE RESSORT DE TORSION ET DÉPHASEUR D'ARBRE À CAMES ET DISPOSITIF DE TENSION DE COURROIE OU DE CHAÎNE

(30) Priorität: 27.05.2016 DE 102016109783
(43) Veröffentlichungstag der Anmeldung: 10.04.2019
(73) Patentinhaber: Scherdel Innotec Forschungs- Und Entwicklungs GmbH, 95615 Marktredwitz (DE)
(72) Erfinder: RAUSCH, Thomas, 95237 Weißdorf (DE); HANNIG, Georg, 95615 Marktredwitz (DE); ANGERMANN, Christoph, 95707 Thiersheim (DE)
(74) Vertreter: Schmitt-Nilson Schraud Waibel Wohlfrom Patentanwälte Partnerschaft mbB
(86) Internationale Anmeldenummer: PCT/EP2017/062788
(87) Internationale Veröffentlichungsnummer: WO 2017/203041

(56) Entgegenhaltungen:
- US-A- 5 464 197
- US-A1- 2013 233 113

## Beschreibung

Die vorliegende Erfindung betrifft eine Drehfederanordnung, sowie einen Nockenwellenversteller und einen Riemen- oder Kettenspanner mit einer erfindungsgemäßen Drehfederanordnung.

Es sind Drehfedern bekannt, bspw. aus der US 5 464 197 A und der US 2013/233113A1, die in einem Nockenwellenversteller oder in einem Riemen- oder Kettenspanner einsetzbar sind, um zwei bewegliche Elemente des Nockenwellenverstellers oder zwei bewegliche Elemente des Riemen- oder Kettenspanners in einer Ausgangsposition zu halten oder in diese zurückzustellen. Diese Drehfedern haben den Nachteil, dass im Betrieb unerwünschte Schwingungen auftreten, teilweise mit großen Resonanzen. Dies macht solche Drehfedern für manche Einsatzfelder, insbesondere für Einsatzfelder unter dynamischer Last ungeeignet.

Es ist daher eine Aufgabe der vorliegenden Erfindung, eine Drehfeder mit verbesserten Federeigenschaften bereitzustellen, die für mehr Einsatzfelder geeignet ist. Des Weiteren sollen ein verbesserter Nockenwellenversteller und ein verbesserter Riemen- oder Kettenspanner mit einer solchen Drehfeder angegeben werden.

Diese Aufgabe wird durch den Gegenstand der unabhängigen Patentansprüche gelöst. Vorteilhafte Weiterbildungen ergeben sich aus den abhängigen Ansprüchen.

Eine erfindungsgemäße Drehfederanordnung umfasst eine Drehfeder mit einem mehrere Drehfeder-Windungen aufweisenden, zylindrischen Federkörper aus einem gewundenen Federdraht, und mit einem ersten und einem zweiten Drehfederdraht-Ende, zur Kraftaufnahme in Drehrichtung, und eine innen an der Drehfeder anliegende Dämpfungsfeder mit einem mehrere Dämpfungsfeder-Windungen aufweisenden, zylindrischen Federkörper aus einem gewundenen Federdraht, und mit einem ersten und einem zweiten Dämpfungsfederdraht-Ende auf. Dabei erstrecken sich die Dämpfungsfeder-Windungen mit ihren Außenseiten teilweise in den zwischen jeweils zwei benachbarten Drehfeder-Windungen gebildeten Zwischenraum hinein und liegen mit im Wesentlichen radial nach außen gerichteter Vorspannung an insbesondere abgerundeten, runden oder abgeschrägten inneren Anlagebereichen jeweils benachbarter Drehfeder-Windungen an. Die Dämpfungsfeder-Windungen weisen einen geringeren Draht-Durchmesser auf als die Drehfeder-Windungen und die Dämpfungsfeder weist 1 bis 3 Windungen weniger auf als die Drehfeder. Dabei erstrecken sich die Dämpfungsfeder-Windungen über einen Großteil der Höhe des zylindrischen Federkörpers der Drehfeder, von einem erste End-Anliegeabschnitt, der in Drehrichtung gesehen vor dem ersten Drehfederdraht-Ende liegt, zu einem zweiten End-Anliegeabschnitt, der in Drehrichtung gesehen vor dem zweiten Drehfederdraht-Ende liegt.

Gemäß einem ersten Grundgedanken der Erfindung werden bei einer erfindungsgemäßen Drehfederanordnung die Dämpfungsfeder-Windungen mit den Drehfeder-Windungen, an denen die Dämpfungsfeder-Windungen jeweils anliegen, gekoppelt. Diese Kopplung ist allerdings nicht vollkommen steif, sondern erfolgt über ein reibschlussmäßiges Anliegen der Dämpfungsfeder-Windungen an den Drehfeder-Windungen. Mit anderen Worten stützt die Dämpfungsfeder die Drehfeder. Gemäß einem zweiten Grundgedanken der Erfindung ergibt sich zwischen den Dämpfungsfeder-Windungen und den jeweils anliegenden Drehfeder-Windungen bei Verdrehen der Drehfederdraht-Enden zueinander eine Reibung.

Als Ergebnis dieser beiden Effekte ergeben sich bei einer erfindungsgemäßen Drehfederanordnung gegenüber herkömmlichen Drehfedern verbesserte Federeigenschaften, eine verbesserte Dämpfung, eine signifikante Verrin-gerung von Resonanzen oder Resonanzüberhöhungen, eine höhere Formstabilität und Betriebsfestigkeit sowie eine längere Lebensdauer und Haltbarkeit.

Das teilweise Hinein-Erstrecken der Dämpfungsfeder-Windungen in den zwischen jeweils zwei benachbarten Drehfeder-Windungen gebildeten Zwischenraum kann auch als Einschmiegen der Dämpfungsfeder zwischen benachbarte Drehfeder-Windungen bezeichnet werden. Dabei drückt die Dämpfungsfeder die Drehfeder radial nach außen.

Bei einer erfindungsgemäßen Drehfederanordnung sind die auftretenden Resonanzen, die sich durch eine dynamische Anregung der Drehfeder ergeben, deutlich reduziert oder ganz vermieden.

Querkraft-Verschiebungen einzelner oder mehrerer Drehfeder-Windungen, vorwiegend in Radialrichtung, werden deutlich reduziert. Dadurch werden die bei konventionellen Drehfedern häufig auftretenden, teilweise großen Verformungen und die damit verbundenen unerwünschten Hubspannungswerte verringert oder ganz vermieden. Somit hat die erfindungsgemäße Drehfederanordnung eine höhere Formstabilität.

Durch eine erfindungsgemäße Drehfederanordnung können auch, verglichen mit einer herkömmlichen Drehfeder, die äußeren Abmessungen des Bauraums beibehalten werden, sodass eine erfindungsgemäße Drehfederanordnung in denselben Anwendungsfällen und in demselben zur Verfügung stehenden Bauraum wie eine herkömmliche Drehfeder eingesetzt werden kann.

Gegenüber einer herkömmlichen Drehfeder ergibt sich bei einer erfindungsgemäßen Drehfederanordnung nur eine geringfügige Veränderung der Federkennlinie. Die Hysterese, bedingt durch die Reibung und die Federrate, ebenfalls verglichen mit einer herkömmlichen Drehfeder, nimmt nur geringfügig zu.

Die insbesondere abgerundeten, runden oder abgeschrägten Anlagebereiche von jeweils benachbarten Drehfederwindungen haben dabei einen ausreichend großen Kantenradius, um auch bei größerer Verformung der Drehfeder genügend Führung für die Dämpfungsfeder zu bieten.

Die Erfinder haben weiterhin herausgefunden, dass mit einer größeren Vorspannung der Dämpfungsfeder nach außen die Dämpfung der Drehfederanordnung insgesamt erhöht werden kann.

Gemäß der Erfindung weisen die Dämpfungsfeder-Windungen einen geringeren Drahtdurchmesser als die Drehfeder-Windungen auf. Im praktischen Betrieb ist die Dämpfungsfeder geringer ausgelastet als die Drehfeder.

Die erfindungsgemäße Drehfederanordnung ist für beliebige dynamische Anwendungsfälle, also für alle Anwendungsfälle geeignet, bei denen eine Kraftaufnahme und/oder eine Federung in Drehrichtung erreicht werden soll und bei denen eine dynamische Belastung vorliegt.

Besonders vorteilhaft ist eine erfindungsgemäße Drehfederanordnung für den Einsatz in einem Nockenwellenversteller für einen Kraftfahrzeugmotor oder für einen Riemen- oder Kettenspanner zur Aufrechterhaltung der Spannung eines Keilriemens, eines Rippenriemens oder einer Kette in einem Arbeitsaggregat, wie einem Verbrennungsmotor, geeignet.

Die erfindungsgemäße Drehfederanordnung kann schnell und problemlos nachträglich in bereits bestehende Nockenwellenversteller oder Riemen- oder Kettenspanner eingebaut werden, da die Dimension der Drehfederanordnung der Dimension einer herkömmlichen Drehfeder entsprechen kann.

Die Federdraht-Enden der Drehfeder ermöglichen eine vorteilhafte Anbindung der Drehfederanordnung, insbesondere in dem Nockenwellenversteller oder in dem Riemen- oder Kettenspanner. Die Federdraht-Enden der Drehfeder können Stellkräfte, insbesondere beim Verstellen des Nockenwellenverstellers oder beim Verdrehen des Riemen- oder Kettenspanners effizient aufnehmen.

Die Drehfeder und die Dämpfungsfeder können separat hergestellt und zu einem späteren Zeitpunkt zu der erfindungsgemäßen Drehfederanordnung maschinell oder manuell zusammengeführt werden. Dies ermöglicht eine schnelle und effiziente Fertigung.

Gemäß einer ersten Ausführungsform werden die jeweils benachbarten Drehfeder-Windungen miteinander über die dazwischen liegende Dämpfungsfeder-Windung gekoppelt. Daraus resultieren verbesserte Federeigenschaften der Drehfederanordnung.

Gemäß einer weiteren Ausführungsform ist, im nicht anliegenden Zustand von Drehfeder und Dämpfungsfeder, der Außendurchmesser der Dämpfungsfeder größer als der Innendurchmesser der Drehfeder, insbesondere um einen Wert größer, der im Bereich zwischen 5 und 50% des Drahtdurchmessers der Dämpfungsfeder liegt, sodass im anliegenden Zustand von Drehfeder und Dämpfungsfeder jeweils benachbarte Drehfeder-Windungen miteinander über die dazwischen liegende Dämpfungsfeder-Windung gekoppelt werden. Daraus resultiert eine günstige Vorspannung zwischen der Drehfeder und der Dämpfungsfeder, woraus sich weiter verbesserte Federeigenschaften, wie zum Beispiel eine besonders gute Dämpfung, eine längere Haltbarkeit und eine höhere Betriebsfestigkeit ergeben.

Gemäß einer weiteren Ausführungsform weisen die Drehfeder-Windungen jeweils einen im Wesentlichen rechteckigen Querschnitt auf, mit abgerundeten oder abgeschrägten Übergangen zwischen deren radialer Innenseite und deren axialer Unterseite und zwischen deren radialer Innenseite und deren axialer Oberseite, wobei diese abgerundeten oder abgeschrägten Übergange die Anlagebereiche der Dämpfungsfeder-Windungen bilden. Dies ermöglicht eine besonders vorteilhafte Kopplung der Dämpfungsfeder-Windungen mit den Drehfeder-Windungen. Dadurch wird eine ausreichend große Anlagefläche zwischen Drehfeder- Windungen und Dämpfungsfeder-Windungen bereitgestellt, was eine gute Führung der Dämpfungsfeder-Windungen auch bei einer Verformung der Drehfeder-Anordnung gewährleistet.

Gemäß einer weiteren Ausführungsform ist die Breite der radialen Oberseite und Unterseite des Querschnitts der Federwindungen der Drehfeder größer als die Höhe der axialen Innenseite und Außenseite. Daraus ergibt sich eine kompakte Bauweise der Drehfederanordnung mit einer hohen Steifigkeit in Radialrichtung.

Gemäß einer weiteren Ausführungsform weisen die Drehfeder-Windungen jeweils einen runden, ovalen, elliptischen oder Multi-Arc Querschnitt auf, mit runden oder abgerundeten Übergängen zwischen deren radialer Innenseite und deren axialer Unterseite und zwischen deren radialer Innenseite und deren axialer Oberseite, wobei diese runden oder abgerundeten Übergange die Anlagebereiche der Drehfeder-Windungen bilden. Dies ermöglicht eine besonders vorteilhafte Kopplung der Dämpfungsfeder-Windungen mit den Drehfeder-Windungen. Es wird eine ausreichend große Anlagefläche zwischen Drehfeder- Windungen und Dämpfungsfeder-Windungen bereitgestellt, was eine gute Führung der Dämpfungsfeder-Windungen auch bei einer Verformung der Drehfeder-Anordnung gewährleistet.

Gemäß einer weiteren Ausführungsform weisen die Dämpfungsfeder-Windungen einen runden, ovalen, elliptischen oder Multi-Arc Querschnitt auf. Dies ermöglicht eine besonders vorteilhafte Kopplung zwischen den Drehfeder-Windungen und der Dämpfungsfeder-Windungen. Es wird eine ausreichend große Anlagefläche zwischen Drehfeder- Windungen und Dämpfungsfeder-Windungen bereitgestellt, was eine gute Führung der Dämpfungsfeder-Windungen auch bei einer Verformung der Drehfeder-Anordnung gewährleistet.

Gemäß der Erfindung erstrecken sich die Dämpfungsfeder-Windungen über einen Großteil der Innenseite des zylindrischen Federkörpers der Drehfeder mit ihren Außenseiten in den zwischen jeweils zwei benachbarten Drehfeder-Windungen gebildeten Zwischenraum hinein und liegen an abgerundeten Anlagebereichen jeweils benachbarter Drehfeder-Windungen mit im Wesentlichen radial nach außen gerichteter Vorspannung an. Daraus resultieren besonders vorteilhafte Federeigenschaften, wie eine verbesserte Dämpfung oder eine signifikante Verringerung von Resonanzen oder Resonanzüberhöhungen der Drehfederanordnung. Gemäß der Erfindung weist die Dämpfungsfeder etwa eine halbe bis drei Windungen weniger auf als die Drehfeder.

Gemäß einer weiteren Ausführungsform weisen der zylindrische Federkörper der Drehfeder und der zylindrische Federkörper der Dämpfungsfeder jeweils die gleiche Federachse auf und der zylindrische Federkörper der Dämpfungsfeder und der zylindrische Federkörper der Drehfeder sind konzentrisch ineinander angeordnet.

Gemäß einer weiteren Ausführungsform sind die Federdraht-Enden der Drehfeder jeweils im Wesentlichen radial nach außen gebogen. Dies ermöglicht eine besonders einfache Anbindung an die jeweiligen Anbindungspunkte, wie zum Beispiel an einen Stator und einen Rotor des Nockenwellenverstellers oder an eine Ankerplatte und einen Schwenkarm des Riemen- oder Kettenspanners.

Gemäß einer weiteren Ausführungsform weist die Dämpfungsfeder zwei Federdrahtenden auf, die jeweils nach innen gebogen sind. An diesen Enden kann ein Vorspannungswerkzeug besonders einfach angebracht werden, um die Dämpfungsfeder vorzuspannen und in die Drehfeder einzubringen.

Gemäß einer weiteren Ausführungsform weisen die Federwindungen der Drehfeder und der Dämpfungsfeder einen identischen Steigungswinkel auf, insbesondere einen Steigungswinkel von 1° bis 3°.

Gemäß einer weiteren Ausführungsform sind die Federdrahtenden der Drehfeder und/oder der Dämpfungsfeder steigungsfrei ausgebildet. Daraus ergibt sich eine besonders vorteilhafte Anbindung der Drehfederanordnung.

Gemäß einer weiteren Ausführungsform sind die Drehfeder und/oder die Dämpfungsfeder aus Federstahl hergestellt.

Die Erfindung betrifft auch eine Drehfederanordnung, welche die folgenden Merkmale aufweist: Eine Drehfeder mit einem mehrere Drehfeder-Windungen aufweisenden, zylindrischen Federkörper aus einem gewundenen Federdraht, und mit einem ersten und einem zweiten Drehfederdraht-Ende, zur Kraftaufnahme in Drehrichtung und eine außen an der Drehfeder anliegende Dämpfungsfeder mit einem mehrere Dämpfungsfeder-Windungen aufweisenden, zylindrischen Federkörper aus einem gewundenen Federdraht, und mit einem ersten und einem zweiten Dämpfungsfederdraht-Ende. Dabei erstrecken sich die Dämpfungsfeder-Windungen mit ihren Innenseiten teilweise in den zwischen jeweils zwei benachbarten Drehfeder-Windungen gebildeten Zwischenraum hinein und liegen mit im Wesentlichen radial nach innen gerichteter Vorspannung an insbesondere abgerundeten, runden oder abgeschrägten äußeren Anlagebereichen jeweils benachbarten Drehfeder-Windungen an.

Alle vorstehend mit Bezug auf die Drehfederanordnung mit innen liegender Dämpfungsfeder erläuterten Vorteile und Ausführungsformen treffen auch für die Drehfederanordnung mit außen liegender Dämpfungsfeder zu und werden zur Vermeidung von Wiederholungen nicht noch einmal erläutert.

Die Erfindung betrifft auch einen Nockenwellenversteller für einen Kraftfahrzeugmotor. Der Nockenwellenversteller weist einen Stator zur starren Verbindung mit einem Zylinderkopf, mit einem im Wesentlichen zylindrischen Stator-Grundkörper mit einer vorderen Wand, mit einer hinteren Wand und mit einer Umfangswand, die eine nach innen gerichtete Innenmantelfläche auf, und wenigstens zwei sich von der Innenmantelfläche radial nach innen erstreckende Stator-Stege, einen drehbeweglich in dem Stator angeordneten Rotor zur starren Verbindung mit einer Nockenwelle, mit einem im Wesentlichen zylindrischen Grundkörper mit einer Außenmantelfläche und mit wenigstens zwei nach außen stehenden Rotor-Flügeln, wobei zwischen den Innenflächen der vorderen Wand und der hinteren Wand, zwischen den Stator-Stegen des Stators, und den Rotor-Flügeln des Rotors sowie zwischen der Innenmantelfläche des Stators und der Außenmantelfläche des Rotors mit einem Hydraulikmedium füllbare oder gefüllte Druckräume gebildet sind und einen Feder-Aufnahmeraum, in dem eine Drehfederanordnung der hier beschriebenen Art so angeordnet ist, dass das erste Drehfederdraht-Ende drehfest mit dem Stator und das zweite Drehfederdraht-Ende drehfest mit dem Rotor verbunden ist.

Der erfindungsgemäße Nockenwellenversteller wird verwendet, um die Steuerzeiten oder die Ventilöffnungszeiten von Ein- und Auslassventilen eines Kraftfahrzeugmotors während des Betriebs zu verändern und somit einen effizienteren Kraftstoffverbrauch bei gleichzeitigem Leistungs- und Drehmomentgewinn zu erhalten.

Im Betrieb kann der Nockenwellenversteller über einen Riemen, Steuerkette oder Stirnräder mit der Kurbelwelle des Kraftfahrzeugmotors gekoppelt werden. Unter einem Riemen werden dabei erfindungsgemäß auch die Elemente Zahnriemen, Steuerriemen, Keilriemen oder Kombinationen dieser Elemente verstanden.

Die Drehfederanordnung ermöglicht eine bessere Dämpfung und eine signifikante Verringerung von Resonanzen oder Resonanzüberhöhungen zwischen Stator und Rotor. Daraus resultiert eine längere Haltbarkeit sowie eine bessere Regelbarkeit und Einstellbarkeit des Nockenwellenverstellers.

Alle vorstehend mit Bezug auf die Drehfederanordnung erläuterten Vorteile und Ausführungsformen treffen auch für den Nockenwellenversteller zu und werden zur Vermeidung von Wiederholungen nicht noch einmal erläutert.

Die Erfindung betrifft auch einen Riemen- oder Kettenspanner zur Aufrechterhaltung der Spannung eines Keilriemens, eines Rippenriemens oder einer Kette in einem Arbeitsaggregat, wie einem Verbrennungsmotor. Der Riemen- oder Kettenspanner weist eine Ankerplatte zur Verbindung mit dem Arbeitsaggregat, einen gegenüber der Ankerplatte drehbar gelagerten Schwenkarm, mit einer, insbesondere an dem entfernt von der Schwenkachse des Schwenkarms gelegenen Endbereich des Schwenkarms drehbar gelagerten Riemen- oder Kettenscheibe zur Führung des Keilriemens, des Rippenriemens oder der Kette und einen Feder-Aufnahmeraum auf, in dem eine Drehfederanordnung der hier beschriebenen Art so angeordnet ist, dass das erste Drehfederdraht-Ende drehfest mit der Ankerplatte und das zweite Drehfederdraht-Ende drehfest mit dem Schwenkarm verbunden ist.

Der erfindungsgemäße Riemen- oder Kettenspanner wird dazu verwendet, den Riemen oder die Kette zuverlässig auf Spannung zu halten. Unter einem Riemen werden dabei erfindungsgemäß auch die Elemente Zahnriemen, Steuerriemen, Keilriemen oder Kombinationen dieser Elemente verstanden. Durch das Verwenden der erfindungsgemäßen Drehfederanordnung in dem Riemen- oder Kettenspanner wird eine zuverlässige Spannung des Riemens oder der Kette ermöglicht, so dass ein Durchrutschen oder Überrutschen des Riemens oder der Kette zuverlässig vermieden wird. Des Weiteren ermöglicht der Riemen- oder Kettenspanner einen sicheren Lauf des Riemens bzw. der Kette entlang der Riemen- oder Kettenscheibe, die an dem Schwenkarm angeordnet ist.

Das drehbare Verbinden des Schwenkarms mit der Ankerplatte über die erfindungsgemäße Drehfederanordnung ermöglicht ein einfaches Aufbringen und ein korrektes, automatisches Spannen des Riemens oder der Kette und einen sicheren Betrieb des Riemen- oder Kettenspanners.

Die Lagerung des Schwenkarms kann über ein Kugellager, ein Rollenlager, ein Gleitlager oder anderweitig erfolgen. Dies gewährleistet ein leichtgängiges Schwenken des Schwenkarms gegenüber der Ankerplatte.

Alle vorstehend mit Bezug auf die Drehfederanordnung erläuterten Vorteile und Ausführungsformen treffen auch für den Riemen- oder Kettenspanner zu und werden zur Vermeidung von Wiederholungen nicht noch einmal erläutert.

Die Erfindung wird im Folgenden anhand der beigefügten Figuren anhand von Ausführungsbeispielen näher erläutert. Dabei zeigen:
Fig. 1 eine perspektivische Ansicht von schräg oben auf eine Drehfederanordnung mit einer Drehfeder und mit einer innenliegenden Dämpfungsfeder, gemäß einem Ausführungsbeispiel der vorliegenden Erfindung;
Fig. 2 eine Draufsicht auf die Drehfederanordnung aus Fig.1;
Fig. 3 eine Schnittansicht entlang einer durch die Federachse verlaufende Schnitt-Ebene A-A der Drehfederanordnung aus den Figuren 1 und 2;
Fig. 4 eine vergrößerte Detailansicht von drei Drehfeder-Windungen und von zwei Dämpfungsfeder-Windungen der Schnittansicht aus Fig. 3;
Fig. 5 eine perspektivische Ansicht auf einen Nockenwellenversteller mit freier Sicht auf einen Stator und auf die in dem Stator angeordnete Drehfederanordnung aus den Figuren 1 bis 4;
Fig. 6 einen perspektivische Ansicht auf den Nockenwellenversteller aus Fig. 5 mit freier Sicht auf einen Rotor;
Fig. 7 eine perspektivische Ansicht auf einen Riemen- oder Kettenspanner mit einer Ankerplatte, mit einem darauf drehbar gelagertem Schwenkarm mit einer Riemen- oder Kettenscheibe und mit der Drehfederanordnung aus Figuren 1 bis 4, welche die Ankerplatte mit dem Schwenkarm verbindet; und
Fig. 8 eine Schnittansicht entlang einer durch die Längsachse des Schwenkarms aus Fig. 7 verlaufende Schnittebene B-B.

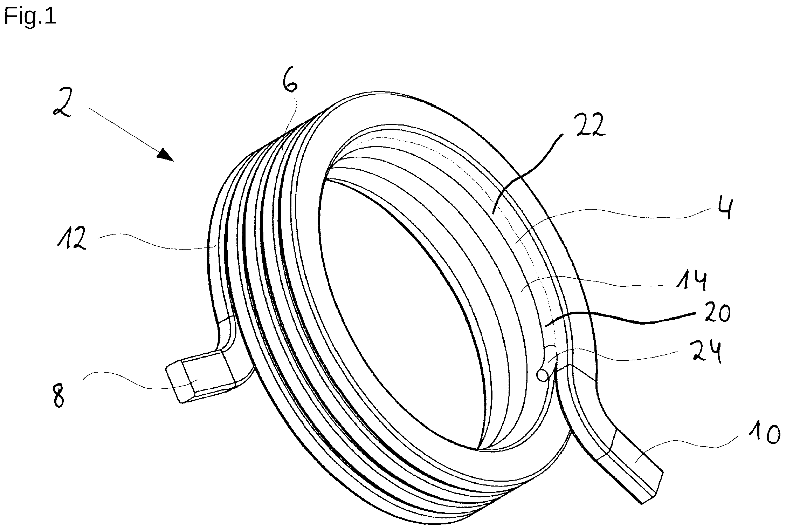

Fig. 1 zeigt eine perspektivische Ansicht schräg von oben auf eine Drehfederanordnung 2 mit einer Drehfeder 4 und mit einer innenliegenden Dämpfungsfeder 20. Die Drehfeder 4 aus einem gewundenen Federdraht weist Drehfeder-Windungen 6 auf, die einen zylindrischen Federkörper ausbilden, der sich um eine Mittel- bzw. Federachse erstreckt. Die Drehfeder 4 weist exemplarisch vier Drehfeder-Windungen 6 sowie ein erstes Drehfederdraht-Ende 8 und ein zweites Drehfederdraht-Ende 10 auf. Selbstverständlich kann die Drehfeder 4 auch mehr oder weniger Drehfeder-Windungen 6 aufweisen. Die Drehfeder 4 ist so ausgebildet, dass sie über ihre Drehfederdraht-Enden 8 und 10 einwirkende Kräfte in Drehrichtung aufnimmt.

Die Drehfeder-Windungen 6 weisen eine radiale Innenseite 12 mit einem Innendurchmesser und eine radiale Außenseite 14 mit einem Außendurchmesser auf, wobei der Innendurchmesser und der Außendurchmesser unterschiedlich sind und auf den jeweiligen Anwendungsfall angepasst werden können. Die Drehfederdraht-Enden 8, 10 erstrecken sich radial nach außen, vorzugsweise in einem annähernd rechten Winkel, von dem Federkörper der Drehfeder 4 weg.

Die Dämpfungsfeder 20 aus einem ebenfalls gewundenen Federdraht weist Dämpfungsfeder-Windungen 22 auf, die ebenfalls einen zylindrischen Federkörper ausbilden, der sich um die gleiche Mittel- bzw. Federachse wie die Drehfeder 4 erstreckt. Die Dämpfungsfeder 20 weist hierbei exemplarisch drei Dämpfungsfeder-Windungen 22 auf. Selbstverständlich kann die Dämpfungsfeder 20 auch mehr oder weniger Windungen 22 aufweisen, wobei die Dämpfungsfeder 20 insbesondere 1 bis 3 Windungen weniger aufweist als die Drehfeder 4. Die Dämpfungsfeder 20 weist ein erstes und ein zweites Dämpfungsfederdraht-Ende 24 und 26 auf, die sich radial ein Stück weit ins Innere des zylindrischen Federkörpers erstrecken. Die Federenden können wahlweise auch radial nach außen gerichtet sein und so einseitig als Verdrehsicherung genutzt werden.

Der zylindrische Federkörper der Drehfeder 4 und der zylindrische Federkörper der Dämpfungsfeder 20 sind konzentrisch ineinander angeordnet.

Die Dämpfungsfeder 20 liegt innen an der Drehfeder 4 an. Dabei erstrecken sich die Dämpfungsfeder-Windungen 22 mit ihren Außenseiten teilweise in den zwischen jeweils zwei benachbarten Drehfeder-Windungen 6 gebildeten Zwischenraum 28 hinein. Die Dämpfungsfeder-Windungen 22 liegen mit radial nach außen gerichteter Vorspannung an inneren Anlagebereichen von jeweils benachbarten Drehfeder-Windungen 6 an. Die Drehfederwindungs-seitigen Anlagebereiche sind durch die abgerundeten oder abgeschrägten Übergänge zwischen der radialen Innenseite 12 zu der axialen Unterseite 18 und zu der axialen Oberseite 16 der jeweiligen Drehfeder-Windungen 6 ausgebildet. Diese Drehfederwindungs-seitigen Anlagebereiche können abgerundet, rund oder abgeschrägt sein.

In einem weiteren, nicht gezeigten Ausführungsbeispiel liegt die Dämpfungsfeder außen an der Drehfeder an und die Dämpfungsfeder-Windungen erstrecken sich mit ihrer Innenseite teilweise in den zwischen jeweils zwei benachbarten Drehfeder-Windungen gebildeten außenliegenden Zwischenraum hinein.

In einem nicht anliegenden Zustand von Drehfeder 4 und Dämpfungsfeder 20 weist die Dämpfungsfeder 20 einen größeren Außendurchmesser auf als der Innendurchmesser der Drehfeder 4. Insbesondere kann der Außendurchmesser der Dämpfungsfeder 20 um einen Wert größer sein, der im Bereich zwischen 5% und 50% des Durchmessers der Dämpfungsfeder-Windungen 22 liegt. Im anliegenden Zustand ermöglicht dies, dass die Dämpfungsfeder-Windungen 22 mit radial nach außen gerichteter Vorspannung an inneren Anlagebereichen von jeweils benachbarten Drehfeder-Windungen 6 anliegen und dass jeweils benachbarte Drehfeder-Windungen 6 miteinander über die dazwischen liegende Dämpfungsfeder-Windung 22 gekoppelt sind.

Die Drehfeder-Windungen 6 sind parallel bzw. fluchtend in Achsrichtung zueinander angeordnet, wobei benachbarte Federwindungen in einem axialen Abstand zueinander stehen, der einer Höhe von 1% bis 50% der Höhe einer Drehfeder-Windung 6 entspricht.

Die Dämpfungsfeder-Windungen 22 erstrecken sich über einen Großteil der Höhe der Innenseite des zylindrischen Federkörpers der Drehfeder 4 bis zu jeweiligen End-Anliegeabschnitten, die in Drehrichtung gesehen, jeweils vor den Drehfederdraht-Enden 8 und 10 liegen und von denen das erste und das zweite Dämpfungsfederdraht-Ende 24 und 26 nach innen gebogen ist.

Die Drehfeder-Windungen 6 und die Dämpfungsfeder-Windungen 22 weisen einen identischen Steigungswinkel auf, der in einem Bereich von 1° und 10°, insbesondere in einem Bereich von 1° bis 3° liegt.

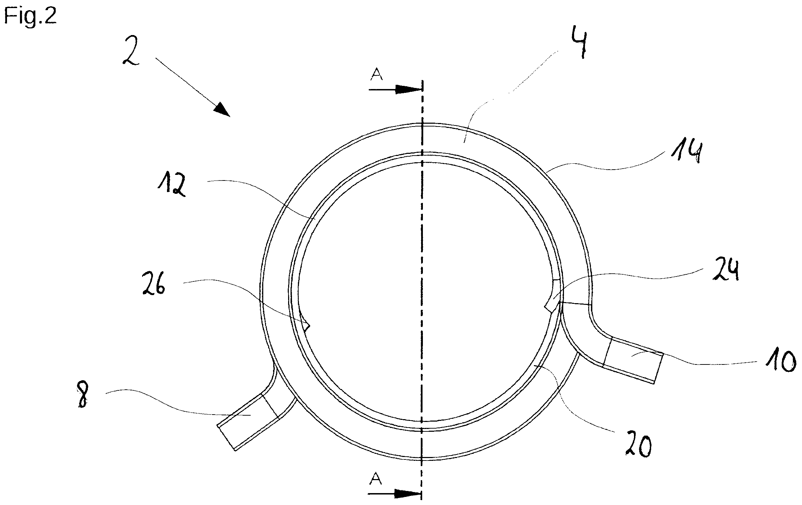

Figur 2 zeigt eine Draufsicht auf die Drehfederanordnung 2 entlang der Mittel- bzw. Federachse. Dabei ist die Drehfeder 4 mit der innen anliegenden Dämpfungsfeder 22 gut zu erkennen.

Die Dämpfungsfederdraht-Enden 24, 26 erstrecken sich exemplarisch in einem Winkel von 5° bis 75°, insbesondere in einem Winkel von 10° bis 45° radial in den vom zylindrischen Federkörper gebildeten Innenraum.

In dem nicht gezeigten Ausführungsbeispiel, bei dem die Dämpfungsfeder außerhalb der Drehfeder angeordnet ist, erstrecken sich die Dämpfungsfederdraht-Enden radial nach außen in dem vorher erwähnten Winkelbereich.

Die Drehfederdraht-Enden 8, 10 sind jeweils von einem Ende einer unteren bzw. oberen Drehfeder-Windung 6 radial nach außen gebogen. Die Drehfederdraht-Enden 8, 10 können in einem Winkel zwischen 80° und 100°, insbesondere in einem Winkel von 90°, ausgehend von dem Ende der jeweiligen Drehfeder-Windung 6, an denen diese ansetzen, radial nach außen gebogen sein. Die Drehfederdraht-Enden 8, 10 liegen in dem Ausführungsbeispiel in einem Winkel von etwa 130° bis 160°, insbesondere von 140° bis 150°, in Drehrichtung gemessen, zueinander. Selbstverständlich können die Drehfederdraht-Enden 8, 10 auch in einem anderen Winkel zueinander angeordnet sein.

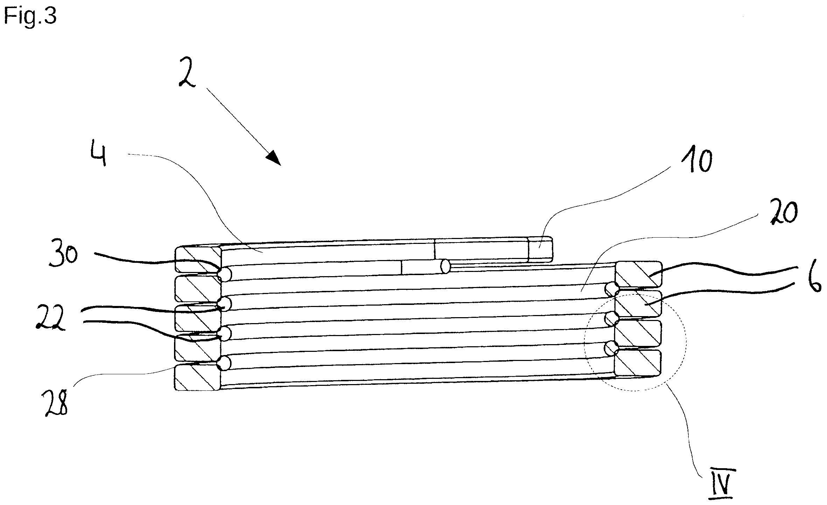

Fig. 3 zeigt eine Schnittansicht entlang einer durch die Federachse verlaufende Schnittebene A-A der Drehfederanordnung 2. Dabei sind die Drehfeder-Windungen 6 mit jeweils im Wesentlichen rechteckigem Querschnitt und die Dämpfungsfeder-Windungen 22 mit rundem Querschnitt gut zu erkennen.

Die Dämpfungsfeder-Windungen 22 liegen mit nach außen gerichteter Vorspannung an den abgerundeten inneren Drehfederwindungs-seitigen Anlagebereichen an, die hier mit dem Bezugszeichen 30 gekennzeichnet sind. Die Drehfederwindungs-seitigen Anlagebereiche 30, die durch die abgerundeten oder abgeschrägten Übergänge von der radialen Innenseite 12 zu der axialen Unterseite 18 und zu der axialen Oberseite 16 der jeweiligen Drehfeder-Windungen 6 ausgebildet sind, sind in Fig. 3 gut zu erkennen.

Das an der oberen Drehfeder-Windung 6 ansetzende Drehfederdraht-Ende 10 ist in Fig. 2 gut zu erkennen.

Die Drehfederdraht-Enden 8, 10 können steigungsfrei ausgebildet sein. Dies gilt auch für die Dämpfungsfederdraht-Enden 24, 26.

In Fig. 3 ist gut zu erkennen, dass die Breite der axialen Oberseite 16 und der axialen Unterseite 18 der Drehfeder-Windungen 22 größer ist als die Höhe der radialen Innenseite 12 und der radialen Außenseite 14 der Drehfeder-Windungen 22. Daraus resultiert eine besonders kompakte Bauform der Drehfederanordnung 2.

Die Drehfeder-Windungen 4 können in weiteren, hier nicht gezeigten Ausführungsbeispielen einen runden, ovalen, elliptischen oder Multi-Arc Querschnitt aufweisen.

Die Dämpfungsfeder-Windungen 22 können in weiteren, hier nicht gezeigten Ausführungsbeispielen einen ovalen, elliptischen oder Multi-Arc Querschnitt aufweisen.

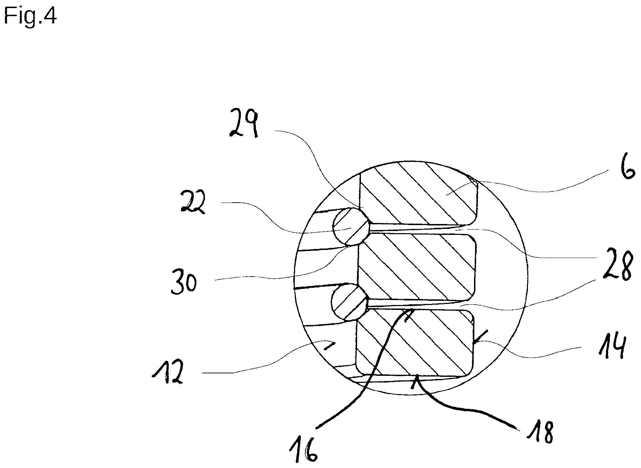

Fig. 4 eine vergrößerte Detailansicht von drei Drehfeder-Windungen 6 und von zwei Dämpfungsfeder-Windungen 22 der Schnittansicht aus Fig. 3. Hierbei ist der Zwischenraum 28 zwischen jeweils zwei benachbarten Drehfeder-Windungen 6 gut zu erkennen. Ebenfalls gut zu erkennen sind die abgerundeten oder abgeschrägten inneren Drehfederwindungs-seitigen Anlagebereiche30, an denen sich die Dämpfungsfeder-Windungen 22 mit Vorspannung anliegen.

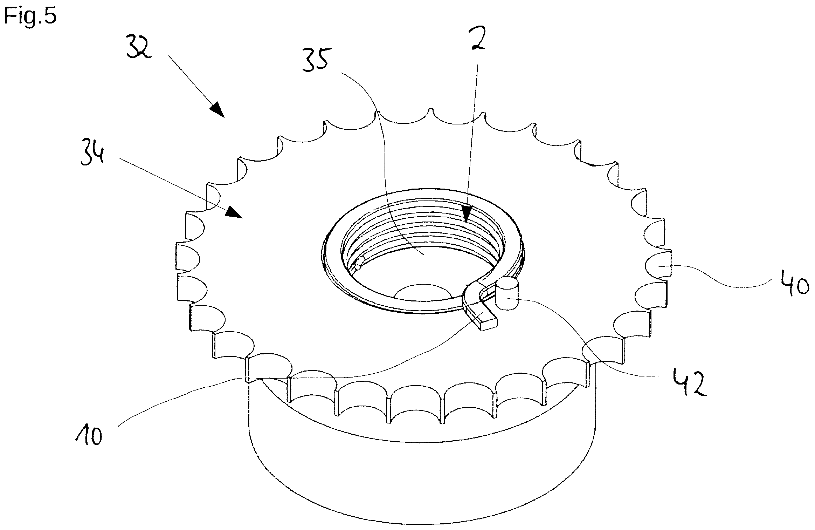

Figur 5 zeigt eine perspektivische Ansicht auf einen Nockenwellenversteller 32 mit freier Sicht auf einen Stator 34 und auf die in dem Stator 34 angeordnete Drehfederanordnung 2.

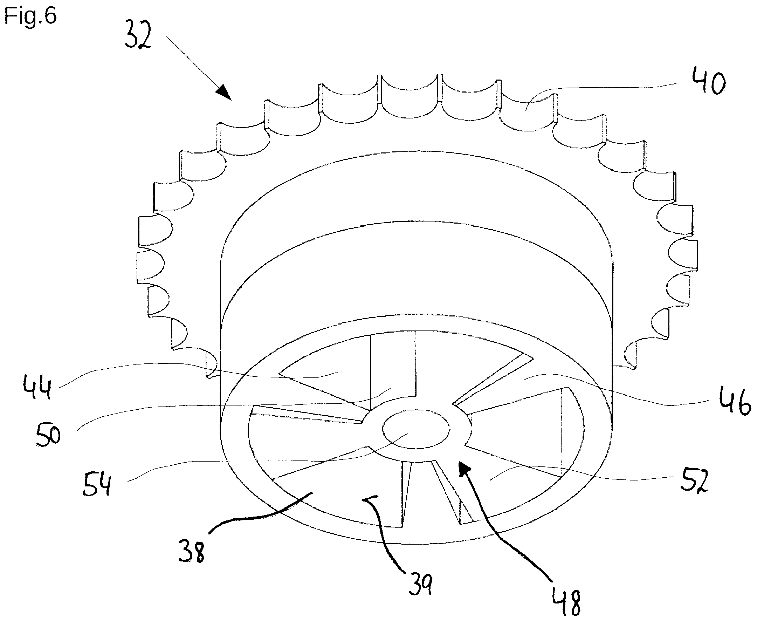

Figur 6 zeigt eine perspektivische Ansicht auf den Nockenwellenversteller 32 mit freier Sicht auf einen Rotor 48, der in dem Stator 34 angeordnet ist.

Der Nockenwellenversteller 32 weist einen Stator 34 und einen drehbeweglich in dem Stator 32 angeordneten Rotor 48 auf.

An dem äußeren Umfang des Stators 34 in Axialrichtung entfernt von dem Rotor 48 ist ein gezahnter Antriebselement-Anschlußbereich 40 ausgebildet, um den Nockenwellenversteller 32 mit einer Antriebseinheit zu verbinden.

Der Stator 34 ist mit einem nicht gezeigten Zylinderkopf verbindbar. Der Stator 34 hat einen im Wesentlichen zylindrischen Stator-Grundkörper 36 und umfasst eine nicht gezeigte vordere, in Fig. 6 obere Wand, eine nicht gezeigte hintere, in Fig. 6 untere Wand, die man sich als den Rotor 48 von unten verschließend vorstellen kann, und eine Umfangswand 38 aufweist.

Die Umfangswand 38 weist eine nach innen gerichtete Innenmantelfläche 39 auf von der sich wenigstens ein, im Ausführungsbeispiel exemplarisch drei Stator-Stege 46 radial nach innen erstrecken. Der in Umfangsrichtung liegende Bereich zwischen den Stator-Stegen 46 bildet einen Rotorflügel-Aufnahmeraum 44 aus. In dem vorliegenden Ausführungsbeispiel weist der Stator 34 exemplarisch drei Stator-Stege 46 auf. Die Stator-Stege 46 erstrecken sich bis zu einer Rotor-Außenmantelfläche 50 des Rotors 48.

Der Rotor 48 weist einen im Wesentlichen zylindrischen Grundkörper mit der Rotor-Außenmantelfläche 50 auf. Von dieser Rotor-Außenmantelfläche 50 erstreckt sich radial nach außen wenigstens ein, im Ausführungsbeispiel exemplarisch drei Rotor-Flügel 52. Die Rotor-Flügel 52 reichen bis zu der Innenmantelfläche 39 des Stators 34. In dem Rotor 48 ist zentral eine Nockenwellen-Befestigungsöffnung 54 angeordnet, in der eine Nockenwelle für einen Kraftfahrzeugmotor starr befestigbar ist.

Zwischen den Innenflächen der vorderen Wand und der hinteren Wand, zwischen den Stator-Stegen 46 des Stators 34 und den Rotor-Flügeln 52 des Rotors 48 sowie zwischen der Innenmantelfläche 39 des Stators 34 und der Außenmantelfläche 50 des Rotors 48 sind mit einem Hydraulikmedium füllbare oder gefüllte Druckräume 56 ausgebildet.

Der Stator 34 und der Rotor 48 bilden einen zylindrischen Federaufnahmeraum 35 aus, in dem die Drehfederanordnung 2 positioniert ist. Der zylindrische Federaufnahmeraum 35 ist in Figur 5 gut zu erkennen. Er erstreckt sich von der oberen Stirnfläche des Stators 34 nach unten in Richtung Rotor 48 und hat eine Höhe, die in etwa dem Blockmaß der Drehfeder-Anordnung 2 entspricht, und einen Innendurchmesser, der in etwa dem Außendurchmesser der Drehfeder-Windungen 6 der Drehfeder-Anordnung 2 entspricht.

Die Drehfederanordnung 2 ist so in dem Federaufnahmeraum 35 des Nockenwellenverstellers 32 angeordnet, dass die Drehfeder-Windungen 6 an der Mantelfläche des Federaufnahmeraum 35 anliegen oder in einem geringen radialen Abstand zu dieser liegen, dass das erste Drehfederdraht-Ende 8 drehfest mit dem Stator 34 und dass das zweite Drehfederdraht-Ende 10 drehfest mit dem Rotor 48 verbunden ist.

Das Drehfederdraht-Ende 8 liegt an einem Stützpin 42 des Stators 34 an, der eine Rückstellkraft der Drehfederanordnung 2 aufnimmt. Der Stützpin 42 kann dabei, wie in Figur 5 gezeigt, in axialer Richtung nach oben aus der Stirnfläche des Stators 34 heraus stehen. Das gegenüberliegende, in den Figuren 5 und 6 nicht zu erkennende Drehfeder-Drahtende ist mit dem Rotor 48 verbunden.

Eine so angeordnete Drehfederanordnung 2 ermöglicht eine präzise Steuerung bzw. Regelung des Verstellwinkels der Nockenwelle. Des Weiteren kann durch das Verwenden der Drehfederanordnung 2 ein effizienterer Verbrauch des Kraftfahrzeugmotors gewährleistet werden. Aufgrund der mechanischen Verstellmöglichkeit der Drehfederanordnung 2 ist eine besonders einfache Rückstellung des Rotors 48 in dem Nockenwellenversteller 32 möglich.

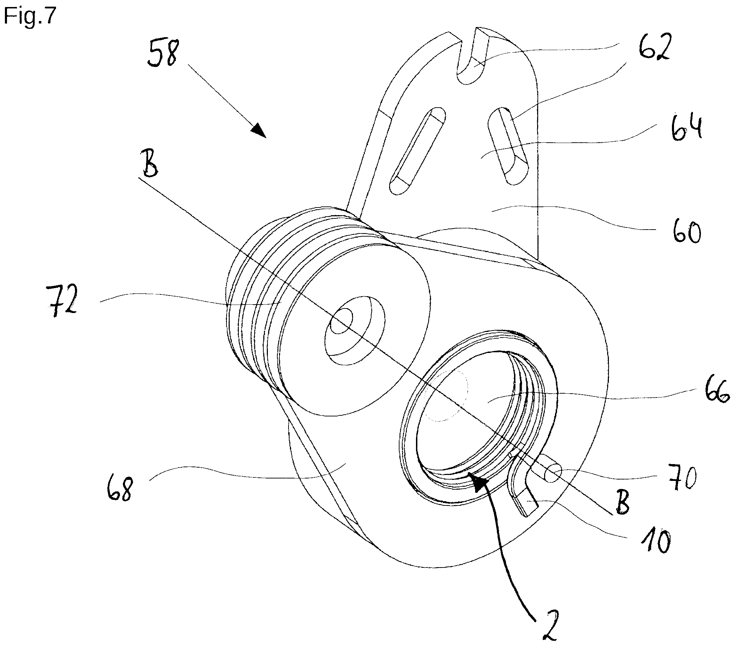

Figur 7 zeigt eine perspektivische Ansicht eines Riemen- oder Kettenspanners 58 zur Aufrechterhaltung der Spannung eines Keilriemens, eines Rippenriemens oder einer Kette in einem Arbeitsaggregat.

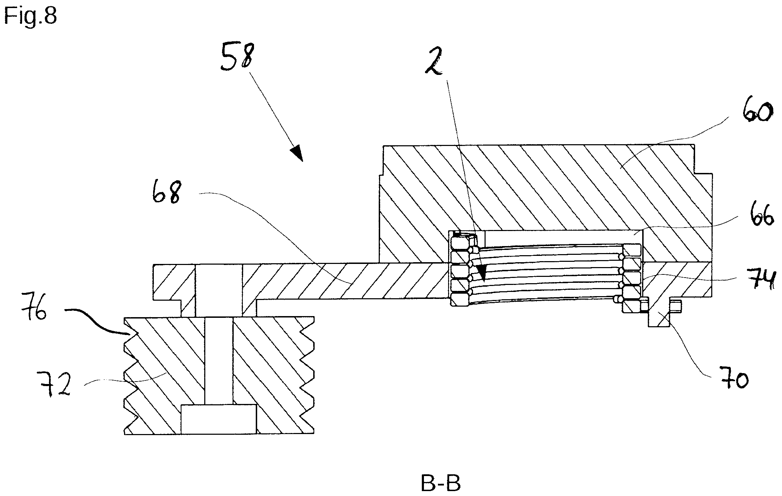

Figur 8 zeigt eine Schnittansicht des Riemen- oder Kettenspanners 58 entlang einer Schnitt-Ebene B-B, die den Schwenkarm 68 in Richtung seiner Längsachse schneidet.

Der Riemen- oder Kettenspanner 58 weist eine Ankerplatte 60 zur vorzugsweise festen Verbindung mit dem Arbeitsaggregat auf. In der Ankerplatte 60 sind exemplarisch drei als Ausnehmungen ausgebildete Befestigungsbereiche 62 vorgesehen. Selbstverständlich können auch mehr oder weniger Befestigungsbereiche in der Ankerplatte vorgesehen sein.

Des Weiteren weist der Riemen- oder Kettenspanner 58 einen gegenüber der Ankerplatte 60 drehbar gelagerten Schwenkarm 68 auf, mit einer insbesondere an dem entfernt von der Schwenkachse des Schwenkarms 68 gelegenen Endbereich des Schwenkarms 68 drehbar gelagerten Riemen- oder Kettenscheibe 72 zur Führung des Riemens oder der Kette..

Der Schwenkarm 68 ist vorzugsweise auf einer Oberseite 64 der Ankerplatte 60 angeordnet, Selbstverständlich ist es möglich, dass der Federaufnahmeraum 66 nur von der Ankerplatte 60 oder nur vom Schwenkarm 68 ausgebildet ist.

Die Drehfederanordnung 2 ermöglicht eine einfache und verlässliche Vorspannung des Schwenkarms 68. Daraus folgt, dass die drehbar gelagerte Riemen- oder Kettenscheibe 72 dauerhaft in Kontakt mit dem Keilriemen, dem Rippenriemen oder der Kette steht und diesen/diese auf Spannung hält. Dadurch wird besonders zuverlässig ein Durchrutschen des Keilriemens, des Rippenriemens oder der Kette vermieden.

Die Ankerplatte 60 und der Schwenkarm 68 bilden einen zylindrischen Federaufnahmeraum 66 aus, in dem die Drehfederanordnung 2 angeordnet ist.

In Fig. 8 ist gut zu erkennen, dass eine zylindrische Vertiefung in der Ankerplatte 60 und eine damit fluchtende zylindrische Aussparung in dem Schwenkarm 68 zusammen den zylindrischen Federaufnahmeraum 66 ausbilden, in dem die Drehfederanordnung 2 angeordnet ist.

Der zylindrische Federaufnahmeraum 66 hat eine Höhe, die in etwa dem Blockmaß der Drehfeder-Anordnung 2 entspricht, und einen Innendurchmesser, der in etwa dem Außendurchmesser der Drehfeder-Windungen 6 der Drehfeder-Anordnung 2 entspricht.

Die Drehfederanordnung 2 ist so in dem Federaufnahmeraum 66 angeordnet, dass die Drehfeder-Windungen 6 an der Mantelfläche des Federaufnahmeraums 66 anliegen oder in einem geringen radialen Abstand zu dieser liegen, dass das erste Drehfederdraht-Ende 8 drehfest mit der Ankerplatte 60 und dass das zweite Drehfederdraht-Ende 10 drehfest über einen Stützpin 70 mit dem Schwenkarm 68 verbunden ist.

Das Drehfederdraht-Ende 8 liegt an dem Stützpin 42 des Schwenkarms 68 an, der eine Rückstellkraft der Drehfederanordnung 2 aufnimmt. Der Stützpin 68 kann dabei, wie in den Figuren 7 und 8 gezeigt, neben dem Federaufnahmeraum 74 in axialer Richtung nach oben aus der Stirnfläche des Schwenkarms 68 heraus stehen. Das gegenüberliegende in den Figuren 7 und 8 nicht zu erkennende Drehfeder-Drahtende ist mit der Ankerplatte 60 verbunden.

Am gegenüberliegenden Ende des Schwenkarms 68 ist eine Bohrung angeordnet, an der die Riemen- oder Kettenscheibe 72 mit geeigneten Befestigungsmitteln drehbar gelagert wird, wobei die Riemen- oder Kettenscheibe 72 auf der von der Ankerplatte 60 wegweisenden Seite des Schwenkarms 68 angeordnet ist. Selbstverständlich kann bei entsprechender Ausgestaltung die Riemen- oder Kettenscheibe 72 auch auf der zur Ankerplatte 60 weisenden Seite des Schwenkarms 68 angeordnet sein. Dies ermöglicht eine besonders kompakte Bauform für einen Riemen- oder Kettenspanner.

Die Riemen- oder Kettenscheibe 72 weist im Ausführungsbeispiel fünf um die Riemen- oder Kettenscheibe 72 in Umfangsrichtung erstreckende Kerben 76 auf, um eine genaue Führung des Keilriemens, des Rippenriemens oder der Kette zu gewährleisten. Selbstverständlich können auch mehr oder weniger Kerben 76 an der Riemen- oder Kettenscheibe 72 angeordnet sein.

### Bezugszeichenliste

- 2: Drehfederanordnung
- 4: Drehfeder
- 6: Federwindungen
- 8: erstes Federdrahtende
- 10: zweites Federdrahtende
- 12: radiale Innenseite
- 14: radiale Außenseite
- 16: axiale Oberseite
- 18: axiale Unterseite
- 20: Dämpfungsfeder
- 22: Federwindungen
- 24: erstes Federdrahtende
- 26: zweites Federdrahtende
- 28: Zwischenräume
- 30: abgerundete innere Anlagebereiche
- 32: Nockenwellenversteller
- 34: Stator
- 36: Stator-Grundkörper
- 37: hintere Wand
- 38: Umfangswand
- 39: Innenmantelfläche
- 40: gezahnter Antriebselement-Anschlussbereich
- 42: Stützpin
- 44: Rotorflügel-Aufnahmeraum
- 46: Stator-Stege
- 48: Rotor
- 50: Rotor-Außenmantelfläche
- 52: Rotor-Flügel
- 54: Nockenwellen-Befestigungsöffnung
- 56: Druckräume
- 58: Riemen- oder Kettenspanner
- 60: Ankerplatte
- 62: Befestigungsbereich
- 64: Oberseite
- 66: zylindrischer Federaufnahmeraum
- 68: Schwenkarm
- 70: Stützpin
- 72: drehbar gelagerte Riemen- oder Kettenscheibe
- 74: zylindrischer Federaufnahmeraum
- 76: Kerbe

## Patentansprüche

1. Drehfederanordnung (2), aufweisend:
eine Drehfeder (4) mit einem mehrere Drehfeder-Windungen (6) aufweisenden, zylindrischen Federkörper aus einem gewundenen Federdraht, und mit einem ersten und einem zweiten Drehfederdraht-Ende (8, 10), zur Kraftaufnahme in Drehrichtung; und
eine innen an der Drehfeder (4) anliegende Dämpfungsfeder (20) mit einem mehrere Dämpfungsfeder-Windungen (22) aufweisenden, zylindrischen Federkörper aus einem gewundenen Federdraht, und mit einem ersten und einem zweiten Dämpfungsfederdraht-Ende (24, 26);
wobei sich die Dämpfungsfeder-Windungen (22) mit ihren Außenseiten teilweise in den zwischen jeweils zwei benachbarten Drehfeder-Windungen (6) gebildeten Zwischenraum (28) hinein erstrecken; und
**dadurch gekennzeichnet, dass**
die Dämpfungsfeder-Windungen (22) mit im Wesentlichen radial nach außen gerichteter Vorspannung an insbesondere abgerundeten, runden oder abgeschrägten inneren Anlagebereichen (30) jeweils benachbarten Drehfeder-Windungen (6) anliegen,
die Dämpfungsfeder-Windungen (22) eine geringeren Draht-Durchmesser aufweisen als die Drehfeder-Windungen (6);
die Dämpfungsfeder (20) 1 bis 3 Windungen weniger aufweist als die Drehfeder (4); und
die Dämpfungsfeder-Windungen (22) sich über einen Großteil der Höhe des zylindrischen Federkörpers der Drehfeder (4) erstrecken, von einem ersten End-Anliegeabschnitt, der in Drehrichtung gesehen, vor dem ersten Drehfederdraht-Ende (8) liegt, zu einem zweiten End-Anliegeabschnitt, der in Drehrichtung gesehen, vor dem zweiten Drehfederdraht-Ende (10) liegt.

2. Drehfederanordnung (2) nach Anspruch 1, wobei jeweils benachbarte Drehfeder-Windungen (6) miteinander über die dazwischen liegende Dämpfungsfeder-Windung (22) gekoppelt werden.

3. Drehfederanordnung (2) nach Anspruch 1 oder 2, wobei, im nicht anliegenden Zustand von Drehfeder (4) und Dämpfungsfeder (20), der Außendurchmesser der Dämpfungsfeder (20) größer ist als der Innendurchmesser der Drehfeder (4), insbesondere um einen Wert größer ist, der im Bereich zwischen 5 und 50% des Drahtdurchmessers der Dämpfungsfeder liegt, sodass im anliegenden Zustand von Drehfeder (4) und Dämpfungsfeder (20), jeweils benachbarte Drehfeder-Windungen (6) miteinander über die dazwischen liegende Dämpfungsfeder-Windung (22) gekoppelt werden.

4. Drehfederanordnung (2) nach einem der vorhergehenden Ansprüche,
wobei die Drehfeder-Windungen (6) jeweils einen im Wesentlichen rechteckigen Querschnitt aufweisen, mit abgerundeten oder abgeschrägten Übergangen zwischen deren radialer Innenseite (12) und deren axialer Unterseite (18) und zwischen deren radialer Innenseite (12) und deren axialer Oberseite (16), wobei diese abgerundeten oder abgeschrägten Übergange die Anlagebereiche (30) der Dämpfungsfeder-Windungen (22) bilden; und/oder
wobei die Breite der axialen Oberseite (16) und Unterseite (18) des Querschnitts der Federwindungen der Drehfeder (4) größer ist als die Höhe der radialen Innenseite (12) und Außenseite (14).

5. Drehfederanordnung (2) nach einem der Ansprüche 1 bis 3, wobei die Drehfeder-Windungen (6) jeweils einen runden, ovalen, elliptischen oder Multi-Arc Querschnitt aufweisen, mit runden oder abgerundeten Übergangen zwischen deren radialer Innenseite (12) und deren axialer Unterseite (18) und zwischen deren radialer Innenseite (12) und deren axialer Oberseite (16), wobei diese runden oder abgerundeten Übergange die Anlagebereiche (30) der Drehfeder-Windungen (6) bilden.

6. Drehfederanordnung (2) nach einem der vorhergehenden Ansprüche, wobei die Dämpfungsfeder-Windungen (22) einen runden, ovalen, elliptischen oder Multi-Arc Querschnitt aufweisen.

7. Drehfederanordnung (2) nach einem der vorhergehenden Ansprüche,
wobei die Dämpfungsfeder-Windungen (22) sich über einen Großteil der Innenseite des zylindrischen Federkörpers der Drehfeder (4) mit ihren Außenseiten in den zwischen jeweils zwei benachbarten Drehfeder-Windungen (6) gebildeten Zwischenraum (28) hinein erstrecken und an abgerundeten Anlagebereichen (30) jeweils benachbarten Drehfeder-Windungen (6) mit im Wesentlichen radial nach außen gerichteter Vorspannung anliegen.

8. Drehfederanordnung (2) nach einem der vorhergehenden Ansprüche,
wobei die Drehfederdrahtenden (8, 10) der Drehfeder (4) jeweils im Wesentlichen radial nach außen gebogen sind; und/oder
wobei die Dämpfungsfeder (20) zwei Federdrahtenden (24, 26) aufweist, die jeweils nach innen gebogen sind.

9. Verwendung der Drehfederanordnung (2) nach einem der vorhergehenden Ansprüche zur Verbesserung der Dämpfung und zur Verringerung von Resonanzen oder Resonanzüberhöhungen in einer dynamischen.Anwendung, insbesondere in einem Nockenwellenversteller für einen Kraftfahrzeugmotor oder in einen Riemen- oder Kettenspanner zur Aufrechterhaltung der Spannung eines Keilriemens, eines Rippenriemens oder einer Kette in einem Arbeitsaggregat, wie einem Verbrennungsmotor.

10. Nockenwellenversteller (32) für einen Kraftfahrzeugmotor, aufweisend:
einen Stator (34) zur starren Verbindung mit einem Zylinderkopf, mit einem im Wesentlichen zylindrischen Stator-Grundkörper (36) mit einer vorderen Wand, mit einer hinteren Wand (37) und mit einer Umfangswand (38), die eine nach innen gerichtete Innenmantelfläche (39) aufweist, und wenigstens zwei sich von der Innenmantelfläche (39) radial nach innen erstreckende Stator-Stege (46);
einen drehbeweglich in dem Stator (34) angeordneten Rotor (48) zur starren Verbindung mit einer Nockenwelle, mit einem im Wesentlichen zylindrischen Grundkörper mit einer Außenmantelfläche (50) und mit wenigstens zwei nach außen stehenden Rotor-Flügeln (52);
wobei zwischen den Innenflächen der vorderen Wand und der hinteren Wand (37), zwischen den Stator-Stegen (46) des Stators (34), und den Rotor-Flügeln (52) des Rotors (48) sowie zwischen der Innenmantelfläche (39) des Stators (34) und der Außenmantelfläche (50) des Rotors (48) mit einem Hydraulikmedium füllbare oder gefüllte Druckräume (56) gebildet sind;
einen Feder-Aufnahmeraum, in dem eine Drehfederanordnung (2) nach einem der vorhergehenden Ansprüche so angeordnet ist, dass das erste Drehfederdraht-Ende (8) drehfest mit dem Stator (34) und das zweite Drehfederdraht-Ende (10) drehfest mit dem Rotor (48) verbunden ist.

11. Riemen- oder Kettenspanner (58) zur Aufrechterhaltung der Spannung eines Keilriemens, eines Rippenriemens oder einer Kette in einem Arbeitsaggregat, wie einem Verbrennungsmotor, aufweisend:
eine Ankerplatte (60) zur Verbindung mit dem Arbeitsaggregat;
einen gegenüber der Ankerplatte (60) drehbar gelagerten Schwenkarm (68), mit einer, insbesondere an dem entfernt von der Schwenkachse des Schwenkarms (68) gelegenen Endbereich des Schwenkarms (68) drehbar gelagerten Riemen- oder Kettenscheibe (72) zur Führung des Keilriemens, des Rippenriemens oder der Kette;
einen Feder-Aufnahmeraum (74), in dem eine Drehfederanordnung (2) nach einem der Ansprüche 1 bis 9 so angeordnet ist, dass das erste Drehfederdraht-Ende (8) drehfest mit der Ankerplatte (60) und das zweite Drehfederdraht-Ende (10) drehfest mit dem Schwenkarm (68) verbunden ist.

## Claims

1. A torsion spring assembly (2), comprising:
a torsion spring (4) having a cylindrical spring body of wound spring wire and with a plurality of torsion spring windings (6), and having first and
second torsion spring ends (8, 10) for taking up forces in a direction of rota - tion; and
a damping spring (20) abutting the torsion spring (4) on the inner side and having a cylindrical spring body of wound spring wire and with a plurality of damping spring windings (22), and having first and second damping spring wire ends (24, 26);
wherein the damping spring windings (22) have their outer sides extending partially into the space (28) formed between two respectively adjacent tor - sion spring windings (6); and
**characterized in that**
the damping spring windings (22) abut in particular rounded, round or beveled inner abutment areas (30) of respectively adjacent torsion spring windings (6) with substantially radially outwardly directed bias,
the damping spring windings (22) have a smaller wire diameter than the tor - sion spring windings (6);
the damping spring (20) has 1 to 3 windings less than the torsion spring (4); and
the damping spring windings (22) extend across a major part of the height of the cylindrical spring body of the torsion spring (4), from a first end abut - ment section located in front of the first torsion spring wire end (8), as seen in the direction of rotation, to a second end abutment section located in front of the second torsion spring wire end (10), as seen in the direction of rota - tion.

2. The torsion spring assembly (2) according to claim 1,
wherein respectively adjacent torsion spring windings (6) are coupled with each other via the damping spring winding (22) located therebetween.

3. The torsion spring assembly (2) according to claim 1 or 2,
wherein, in the non-abutting state of torsion spring (4) and damping spring (20), the outer diameter of the damping spring (20) is greater than the inner diameter of the torsion spring (4), in particular greater by a value in the range between 5 and 50% of the wire diameter of the damping spring, so that in the abutting state of torsion spring (4) and damping spring (20), re - spectively adjacent torsion spring windings (6) are coupled with each other via the damping spring winding (22) located therebetween.

4. The torsion spring assembly (2) according to any of the preceding claims,
wherein the torsion spring windings (6) each have a substantially rectangu - lar cross-sectional area with rounded or beveled transitions between the ra - dial inner side (12) thereof and the axial lower side (18) thereof and between the radial inner side (12) thereof and the axial upper side (16) thereof, with these rounded or beveled transitions constituting the abutment areas (30) of the damping spring windings (22); and/or
wherein the width of the axial upper side (16) and lower side (18) of the cross-sectional area of the spring windings of the torsion spring (4) is greater than the height of the radial inner side (12) and outer side (14).

5. The torsion spring assembly (2) according to any of claims 1 to 3,
wherein the torsion spring windings (6) each have a round, oval, elliptic or multi-arc cross-sectional area with round or rounded transitions between the radial inner side (12) thereof and the axial lower side (18) thereof and between the radial inner side (12) thereof and the axial upper side (16) thereof, with these round or rounded transitions constituting the abutment areas (30) of the torsion spring windings (6).

6. The torsion spring assembly (2) according to any of the preceding claims,
wherein the damping spring windings (22) have a round, oval, elliptic or multi-arc cross-sectional area.

7. The torsion spring assembly (2) according to any of the preceding claims,
wherein the damping spring windings (22) have their outer sides extending into the space (28) formed between two respectively adjacent torsion spring windings (6) across a major part of the inside of the cylindrical spring body of the torsion spring (4), and abutting rounded abutment areas (30) of re - spectively adjacent torsion spring windings (6) with substantially radially out - wardly directed bias.

8. The torsion spring assembly (2) according to any of the preceding claims,
wherein the torsion spring wire ends (8, 10) of the torsion spring (4) are each bent in substantially radially outward direction; and/or
wherein the damping spring (20) comprises two spring wire ends (24, 26) that are each bent inwardly.

9. The use of the torsion spring assembly (2) according to any of the preced - ing claims for enhancing the damping effect and for reducing resonances or resonance peaks in a dynamic application, in particular in a cam phaser for a motor vehicle engine or in a belt or chain tensioner for maintaining the tension of a V-belt, a ribbed V-belt or a chain in a work unit, such as an in - ternal combustion engine.

10. A cam phaser (32) for a motor vehicle engine, comprising:
a stator (34) for rigid connection to a cylinder head, said stator comprising a substantially cylindrical stator base body (36) including a front wall, a rear wall (37) and a circumferential wall (38) having an inwardly directed inner peripheral surface (39), as well as at least two stator webs (46) extending radially inwardly from the inner peripheral surface (39);
a rotor (48) for rigid connection to a camshaft, said rotor being rotatably ar - ranged in the stator (34) and including a substantially cylindrical base body having an outer peripheral surface (50) and at least two outwardly directed rotor wings (52);
wherein pressure spaces (56) adapted to be filled or filled with a hydraulic medium are formed between the inner surfaces of the front wall and the rear wall (37), between the stator webs (46) of the stator (34) and the rotor wings (52) of the rotor (48) as well as between the inner peripheral surface (39) of the stator (34) and the outer peripheral surface (50) of the rotor (48); and
a spring receiving space having a torsion spring assembly (2) according to any of the preceding claims arranged therein such that the first torsion spring wire end (8) is non-rotatably connected to the stator (34) and the second torsion spring wire end (10) is non-rotatably connected to the rotor (48).

11. A belt or chain tensioner (58) for maintaining the tension of a V-belt, a ribbed V-belt or a chain in a work unit, such as an internal combustion en - gine, comprising:
an anchor plate (60) for connection to the work unit;
a pivot arm (68) which is rotatably supported with respect to the anchor plate (60) and which has a belt or chain pulley (72) for guiding the V-belt, the ribbed V-belt or the chain, with said belt or chain pulley being rotatably supported in particular at the end portion of the pivot arm (68) remote from the pivot axis of the pivot arm (68);
a spring receiving space (74) in which a torsion spring assembly (2) accord - ing to any of claims 1 to 9 is arranged such that the first torsion spring wire end (8) is non-rotatably connected to the anchor plate (60) and the second torsion spring wire end (10) is non-rotatably connected to the pivot arm (68).

## Revendications

1. Agencement de ressort de torsion (2) comportant :
un ressort de torsion (4) comprenant un corps cylindrique de ressort en un fil à ressort enroulé à plusieurs spires de ressort de torsion (6) et comprenant une première et une deuxième extrémité de fil à ressort de torsion (8, 10) pour la prise de force dans le sens de la rotation, et
un ressort d'amortissement (20) appliqué à l'intérieur contre le ressort de torsion (4) et comprenant un corps cylindrique de ressort en un fil à ressort enroulé à plusieurs spires de ressort d'amortissement (22) et comprenant une première et une deuxième extrémité de fil à ressort d'amortissement (24, 26) ;
cependant que les spires de ressort d'amortissement (22) s'étendent par leurs côtés extérieurs partiellement jusque dans l'interstice (28) constitué entre respectivement deux spires de ressort de torsion (6) avoisinantes ; et
**caractérisé en ce que**
les spires de ressort d'amortissement (22) sont, avec une précontrainte dirigée essentiellement radialement vers l'extérieur, appliquées à des zones d'appui (30) intérieures, en particulier arrondies, rondes ou biseautées, de spires de ressort de torsion (6) respectivement avoisinantes,
les spires de ressort d'amortissement (22) ont un diamètre de fil inférieur à celui des spires de ressort de torsion (6) ;
le ressort d'amortissement (20) comporte entre 1 et trois spires de moins que le ressort de torsion (4) ; et
les spires de ressort d'amortissement (22) s'étendent sur une majeure partie de la hauteur du corps cylindrique de ressort du ressort de torsion (4), d'une première section d'extrémité d'application qui, vue dans le sens de la rotation, est située avant la première extrémité de fil à ressort de torsion (8), à une deuxième section d'extrémité d'application qui, vue dans le sens de la rotation, est située avant la deuxième extrémité de fil à ressort de torsion (10).

2. Agencement de ressort de torsion (2) selon la revendication 1, cependant que des spires de ressort de torsion (6) respectivement avoisinantes sont couplées entre elles par l'intermédiaire de la spire de ressort d'amortissement (22) se trouvant entre elles.

3. Agencement de ressort de torsion (2) selon la revendication 1 ou 2, cependant que, à l'état non appliqué du ressort de torsion (4) et du ressort d'amortissement (20), le diamètre extérieur du ressort d'amortissement (20) est supérieur au diamètre intérieur du ressort de torsion (4), en particulier supérieur d'une valeur comprise entre 5% et 50 % du diamètre du fil du ressort d'amortissement, de telle sorte que, à l'état appliqué du ressort de torsion (4) et du ressort d'amortissement (20), des spires de ressort de torsion (6) respectivement avoisinantes sont couplées entre elles par l'intermédiaire de la spire de ressort d'amortissement (22) se trouvant entre elles.

4. Agencement de ressort de torsion (2) selon une des revendications précédentes,
cependant que les spires de ressort de torsion (6) présentent respectivement une coupe transversale essentiellement rectangulaire, avec des transitions arrondies ou biseautées entre leur côté radial intérieur (12) et leur côté axial inférieur (18), et entre leur côté radial intérieur (12) et leur côté axial supérieur (16), cependant que ces transitions arrondies ou biseautées constituent les zones d'appui (30) des spires de ressort d'amortissement (22) ; et/ou
cependant que la largeur du côté axial supérieur (16) et inférieur (18) de la coupe transversale des spires de ressort du ressort de torsion (4) est supérieure à la hauteur du côté radial intérieur (12) et extérieur (14).

5. Agencement de ressort de torsion (2) selon une des revendications de 1 à 3, cependant que les spires de ressort de torsion (6) présentent respectivement une coupe transversale ronde, ovale, elliptique ou multi-arquée, avec des transitions rondes ou arrondies entre leur côté radial intérieur (12) et leur côté axial inférieur (18), et entre leur côté radial intérieur (12) et leur côté axial supérieur (16), cependant que ces transitions rondes ou arrondies constituent les zones d'appui (30) des spires de ressort de torsion (6).

6. Agencement de ressort de torsion (2) selon une des revendications précédentes, cependant que les spires de ressort d'amortissement (22) présentent une coupe transversale ronde, ovale, elliptique ou multi-arquée.

7. Agencement de ressort de torsion (2) selon une des revendications précédentes, cependant que les spires de ressort d'amortissement (22) s'étendent sur une majeure partie du côté intérieur du corps cylindrique de ressort du ressort de torsion (4) par leurs côtés extérieurs situés jusque dans l'interstice (28) constitué entre respectivement deux spires de ressort de torsion (6) avoisinantes, et que, à des zones d'appui (30) arrondies, respectivement des spires de ressort de torsion (6) avoisinantes à précontrainte dirigée essentiellement radialement vers l'extérieur sont appliquées.

8. Agencement de ressort de torsion (2) selon une des revendications précédentes,
cependant que les extrémités de fil à ressort de torsion (8, 10) du ressort de torsion (4) sont respectivement essentiellement courbées radialement vers l'extérieur ; et/ou
cependant que le ressort d'amortissement (20) comporte deux extrémités de fil à ressort (24, 26) qui sont respectivement courbées vers l'intérieur ;

9. Utilisation de l'agencement de ressort de torsion (2) selon une des revendications précédentes pour l'amélioration de l'amortissement et pour la réduction de résonances ou surélévation de résonance dans une application dynamique, en particulier dans un déphaseur d'arbre à cames pour un moteur de véhicule automobile ou dans un tendeur de courroie ou de chaîne pour le maintien de la tension d'une courroie trapézoïdale, d'une courroie striée ou d'une chaîne dans une unité de travail telle qu'un moteur à combustion.

10. Déphaseur d'arbre à cames (32) destiné à un moteur à combustion, comprenant :
un stator (34) pour la liaison rigide avec une tête de cylindre, comprenant un corps de base de stator (36) essentiellement cylindrique ayant une paroi antérieure, une paroi postérieure (37) et une paroi périphérique (38) qui comporte une surface intérieure d'enveloppe (39) orientée vers l'intérieur, et au moins deux pattes de stator (46) s'étendant vers l'intérieur depuis la surface intérieure d'enveloppe (39) ;
un rotor (48) agencé en mobilité rotative dans le stator (34) pour la liaison rigide avec un arbre à cames, comprenant un corps de base essentiellement cylindrique ayant une surface extérieure d'enveloppe (50) et au moins deux ailes de rotor (52) disposées vers l'extérieur ;
cependant que, entre les surfaces intérieures de la paroi antérieure et de la paroi postérieure (37), entre les pattes de stator (46) du stator (34) et les ailes de rotor (52) du rotor (48), ainsi qu'entre la surface intérieure d'enveloppe (39) du stator (34) et la surface extérieure d'enveloppe (50) du rotor (48), des chambres de pression (56) remplissables ou remplies avec un fluide hydraulique sont constituées ;
un espace de réception de ressort dans lequel un agencement de ressort de torsion (2) selon une des revendications précédentes est agencé de telle façon que la première extrémité de fil à ressort de torsion (8) est solidaire en rotation du stator (34) et que la deuxième extrémité de fil à ressort de torsion (10) est solidaire en rotation du rotor (48).

11. Tendeur de courroie ou de chaîne (58) pour le maintien de la tension d'une courroie trapézoïdale, d'une courroie striée ou d'une chaîne dans une unité de travail telle qu'un moteur à combustion, comprenant :
une plaque d'ancrage (60) pour la liaison avec une unité de travail ;
un bras pivotant (68) monté de manière à pouvoir tourner par rapport à la plaque d'ancrage (60), comprenant une poulie à courroie ou à chaîne (72) montée, de manière à pouvoir tourner, en particulier à la zone d'extrémité du bras pivotant (68) éloignée de l'axe de pivotement du bras pivotant (68) pour le guidage de la courroie trapézoïdale, de la courroie striée ou de la chaîne ;
un espace de réception de ressort (74) dans lequel un agencement de ressort de torsion (2) selon une des revendications de 1 à 9 est agencé de telle façon que la première extrémité de fil à ressort de torsion (8) est solidaire en rotation de la plaque d'ancrage (60), et que la deuxième extrémité de fil à ressort de torsion (10) est solidaire en rotation du bras pivotant (68).
